# EUROPÄISCHE PATENTSCHRIFT

(11) **EP 0 772 412 B1**
(45) Veröffentlichungstag und Bekanntmachung des Hinweises auf die Patenterteilung: **20.10.1999**
(21) Anmeldenummer: 95926964.8
(22) Anmeldetag: 21.07.1995
(51) Int. Cl.: A47C 3/28, F16B 7/14

(54) **ARRETIERVORRICHTUNG MIT SELBSTVERSTÄRKENDEM BREMSSYSTEM**
PROGRESSIVELY BRAKED LOCKING DEVICE
DISPOSITIF D'ARRET A SYSTEME DE FREINAGE PROGRESSIF

(30) Priorität: 27.07.1994 DE 4426520; 05.05.1995 DE 19516633
(43) Veröffentlichungstag der Anmeldung: 14.05.1997
(73) Patentinhaber: Hölle, Erwin, 72348 Rosenfeld (DE)
(72) Erfinder: Hölle, Erwin, 72348 Rosenfeld (DE)
(74) Vertreter: Dreiss, Fuhlendorf, Steimle & Becker
(86) Internationale Anmeldenummer: EP9502872
(87) Internationale Veröffentlichungsnummer: WO9603065

(56) Entgegenhaltungen:
- DE-A- 3 600 399
- US-A- 4 728 072

## Beschreibung

Die Erfindung betrifft eine Arretiervorrichtung zum Feststellen der gewählten Relativlage eines einstellbaren ersten Elements gegenüber einem zweiten Element, beispielsweise eines Sitzmöbel-Sitzes gegenüber einem Sitzmöbel-Fußgestell, mit den Merkmalen des Oberbegriffs des Anspruchs 1 oder des Anspruchs 2.

Ein Anwendungsgebiet für eine derartige Arretierungsvorrichtung ist das beispielsweise angeführte Sitzmöbel. Dort dient sie z.B. dazu, die Sitzhöhe für den jeweiligen Benutzer dieses Sitzmöbels in eine geeignete Position zu bringen, die bis zur nächsten Verstellung beibehalten wird. Sitzmöbel, also beispielsweise Bürostühle sind, zumindest bei Komfortausführung, eventuell auch noch mit weiteren Arretierungsvorrichtungen dieser Art ausgestattet, beispielsweise einer Verstelleinrichtung für die Lehnenneigung und/oder die Sitzflächenneigung.

Desweiteren verwendet man derartige Arretierungsvorrichtungen auch im Kraftfahrzeugbau, beispielsweise um Heckklappen in der Offenstellung zu halten. Andere Anwendungsgebiete sind Türöffner, Waschmaschinen und dergleichen.

Bislang kennt man solche Arretierungsvorrichtungen in Verbindung mit sog. Gasdruckfedern. Dabei ist der Zylinder mit einem Gas gefüllt, welches über ein von außen betätigbares Ventil von dem Raum vor dem Kolben in den Raum hinter den Kolben strömen kann und umgekehrt. Meist befindet sich auch noch eine kleine Flüssigkeits- beispielsweise Ölmenge in diesen Arretierungsvorrichtungen.

Der Nachteil dieser vorbekannten Arretierungsvorrichtungen liegt insbesondere in der problematischen Recycelbarkeit, was vor allen Dingen mit der Flüssigkeitsfüllung zusammenhängt. Abgesehen davon sind sie vergleichsweise teuer und wegen der Ventileinrichtung nicht ungefährlich. Es ist schon vorgekommen, daß beim Versagen des Ventils eine schlagartige Verstellung in eine der beiden Endlagen erfolgt, die den Benutzer zumindest stark erschreckt, unter Umständen aber auch verletzen kann. Desweiteren sind unvermeidbare Gasverluste eine Ständige Unsicherheit, ob am Lager gehaltene oder eingebaute Elemente noch funktionstüchtig sind. Eine Reparatur ist bei Gasfedern ausgeschlossen.

Die DE 36 00 399 A1 offenbart ein Federelement, welches in einer beliebigen Stellung arretierbar ist. Sehr hohe Kräfte können jedoch nicht abgestützt werden, da sonst die Bremse an der Kolbeninnenfläche durchrutscht.

Aus der DE-OS 33 46 225 ist eine Vorrichtung zum Hubverstellen von Teilen, insbesondere von Bürodrehstühlen bekannt, bei der zwei Hohlzylinder teleskopartig ineinander schiebbar sind. In dem inneren Zylinder ist eine am äußeren Zylinder abgestützte Gewindestange axial verschiebbar gelagert, mit der eine drehbar gelagerte, mit dem inneren Zylinder verbundene Gewindehülse im Eingriff steht. Die beiden Zylinder werden durch eine im Inneren angebrachte Schraubendruckfeder auseinandergedrückt, sobald die oberhalb der Gewindehülse angeordnete, mechanische Bremse gelöst ist.

Die Bremse umfaßt eine konisch ausgebildete Bremstrommel und eine Bremsfeder, die die Bremstrommel in einem entsprechend konisch ausgebildeten Abschnitt des inneren Zylinders kraftschlüssig hält. Die Bremstrommel kann durch ein von außen bedienbares Betätigungselement axial verschoben werden, und somit die Gewindehülse freigeben. Werden nun keine weiteren Axialkräfte in die Vorrichtung eingeleitet, so kann die Schraubendruckfeder die Gewindehülse entlang der Gewindeflanke nach oben drücken und dabei verdrehen, denn das Gewinde ist ein leichtgängiges Trapezgewinde.

Um die Gewindehülse, also die Sitzfläche des Stuhles nach unten zu bewegen muß die Federkraft überwunden werden. Durch aufsetzen auf den Stuhl wird dies üblicherweise erreicht.

Derartige Vorrichtungen werden häufig bei schweren Bürostühlen, Ladeklappen an Autos oder dergleichen eingesetzt, bei denen nur ein begrenztes Raumangebot zur Verfügung steht. Somit stellt sich für den Konstrukteur solcher Vorrichtungen die Schwierigkeit, genügend Platz für eine ausreichend dimensionierte Schraubendruckfeder zu schaffen, die einerseits in der Lage ist, die Last auch wirklich hochzudrücken, wenn die Bremse gelöst ist und die andererseits in dem zur Verfügung stehenden Platz untergebracht werden kann.

Darüberhinaus besteht die Vorrichtung gemäß der DE-OS 33 46 225 aus sehr vielen, ineinander geschachtelten Einzelteilen, die die Herstellung und Montage erschweren und verteuern. Größere Längskräfte können nicht aufgenommen werden, da der Bremskonuswinkel sonst zu flach wird und sich nur schwer oder nicht mehr lösen läßt.

Davon ausgehend liegt der Erfindung die Aufgabe zugrunde, eine Arretiervorrichtung zu schaffen, die nur wenige Einzelteile aufweist, die einfach zu montieren ist, große Kräfte aufnehmen kann und die genügend Platz zur Aufnahme einer ausreichenden Druckfeder bereitstellt.

Zur Lösung dieser Aufgabe wird eine Arretiervorrichtung vorgeschlagen, die die Merkmale des Anspruchs 1 oder 2 aufweist.

Eine nach dieser technischen Lehre ausgebildete Arretiervorrichtung hat den Vorteil, daß durch die Anordnung einer Kolbenstange und eines damit verbundenen Kolbens, auf den die Bremse direkt einwirkt, einige Bauteile entfallen können. Beispielsweise übernimmt die Kolbenstange unter anderem die Funktion als Distanzelement, die in der DE-OS 33 46 225 der innere Zylinder innehat, so daß der innere Zylinder bei der erfindungsgemäßen Arretiervorrichtung entfällt.

Hierdurch wird nicht nur ein kostenintensives Bauteil eingespart, sondern gleichzeitig der der Schraubendruckfeder zur Verfügung stehende Durchmesser bei gleichbleibenden Außenmaßen vergrößert, so daß eine Schraubendruckfeder mit einer größeren Federkraft eingesetzt werden kann.

Die Anordnung des Betätigungselementes in der Kolbenstange trägt weiter zu kompakten Bauweise der erfindungsgemäßen Arretiervorrichtung bei.

Durch das direkte einwirken der Bremse auf den Kolben können weitere Bauteile eingespart und der Aufbau der Arretiervorrichtung weiter vereinfacht werden.

Bei dieser Arretierungsvorrichtung findet kein Überströmen eines Mediums vom einen Zylinderraum in den anderen statt, wenn man von der Luftverdrängung durch den bewegbaren Kolben absieht, die aber keine ausnutzbare Wirkung erzeugt. Stattdessen wird die Kolbenbewegung mechanisch gestoppt, wenn die eingestellte Lage erreicht ist. Soll letztere verändert werden, so löst man die Arretierung des Kolbens, verschiebt diesen in die nächste Gebrauchsstellung und arretiert ihn dann wieder. Dies alles erfolgt wie bei den bekannten Arretierungsvorrichtungen durch eine Axialverschiebung des die Kolbenstange in axialer Richtung nach außen hin durchsetzenden Betätigungselements, auf welches in der Regel von Hand eingewirkt wird. Wenn man die Bremse löst, so führt dies automatisch zu einem Entspannen oder stärkeren Spannen der Bremsfeder. Diese gespeicherte Kraft wirkt sich aus, sobald man das Betätigungselement freigibt. Dies führt dann zum Feststellen der Bremse und damit zur Arretierung der eingestellten Lage, beispielsweise des Sitzes gegenüber dem Fußgestell bei einem Stuhl.

Weil bei dieser Arretierungsvorrichtung auf teure Abdichtungen verzichtet werden kann und die Zahl der Einzelteile nicht oder zumindest nicht nennenswert größer ist als bei den bekannten Arretierungsvorrichtungen, lassen sich auch die Herstellungskosten nicht unerheblich senken. Auch die äußeren Abmessungen können gleich sein wie bei den herkömmlichen Arretierungsvorrichtungen. Desweiteren ist eine stufenlose Verstellung ohne weiteres möglich und auch das Aufbringen einer Blockierkraft in der gleichen Größenordnung wie beim bekannten Stand der Technik. Das Auslösen und Feststellen erfolgt in quasi identischer Weise, sofern keine Sonderfunktionen angestrebt sind. Die erfindungsgemäße Arretierungsvorrichtung stellt somit einen vollwertigen Ersatz für Vorrichtungen mit Gasfedern dar und weist die gleichen Abmessungen auf. Höhere Geräuschentwicklungen als beim Stand der Technik sind nicht zu erwarten.

Eine bevorzugte Ausführungsform der Erfindung ist dadurch gekennzeichnet, daß die mechanische Bremse zwischen den Kolben und den Zylinder geschaltet ist. Über den ganzen Verstellbereich hinweg bildet dabei die Kolbeninnenwandung eine Bremsgegenfläche und man kann deren Oberfläche der angestrebten Bremswirkung entsprechend ausbilden.

Dabei sieht eine Weiterbildung der Erfindung vor, daß sich am Kolben mindestens ein quer zu dessen Längsachse bewegbares Bremselement befindet, das in seiner wirksamen Stellung an die Zylinderinnenwandung angepreßt ist. Die Anpreßkraft resultiert aus der erwähnten, mindestens einen Bremsfeder. Zieht man, bezogen auf den Zylinderdurchmesser, das Bremselement beispielsweise in radialer Richtung zurück, bis es von der Zylinderinnenwandung abgehoben ist, so läßt sich anschließend der Kolben im Zylinder ohne weiteres verschieben, wozu man die Kraft der Rückstellfeder oder bei einem Stuhl eventuell auch das Gewicht des Benutzers beim Absenken der Sitzfläche heranziehen kann. Entsprechendes gilt für die anderen genannten und nicht genannten Anwendungsfälle.

Die Bremse läßt sich auf einfachste Art und Weise über eine Axialbewegung des Betätigungselements lösen bzw. über eine gegenläufige Verschiebebewegung schließen. Man nutzt hier das Prinzip der schiefen Ebene aus, wobei sich die benötigte Kraft durch entsprechende Wahl der Neigungsebene innerhalb weiter Grenzen festlegen läßt. In engem Zusammenhang damit steht natürlich auch die maximale Verschiebestrecke des Betätigungselements. Hierbei darf nicht übersehen werden, daß vielfach nicht unmittelbar auf das Betätigunselement eingewirkt wird, sondern indirekt über mindestens ein weiteres Element, beispielsweise einen doppelarmigen Hebel.

Wenn das im Durchmesser größere Konusende in sehr vorteilhafter Weise in einen flachen, im Zylinder geführten Teller übergeht oder damit verbunden ist, so kann dieser Teller einen Federteller bilden, in welchem man gegebenenfalls das zugeordnete Federende zentrieren kann. Auf jeden Fall drückt aber das betreffende Federende unmittelbar gegen diesen Zylinder. Der Außendurchmesser des Tellers kann mit dem üblichen Spiel dem Innendurchmesser des Zylinders entsprechen, so daß man auch eine dementsprechend große Feder verwenden kann.

Eine Weiterbildung der Erfindung ist dadurch gekennzeichnet, daß der Kolben drehbar, aber axial unverschiebbar an der Kolbenstange gelagert ist, wobei der Kolben beim Verschieben im Zylinder eine gesteuerte Drehbewegung ausführt. Dieser Drehbewegung ist die axiale Bewegung des Kolbens überlagert, und man kann auf diese Weise innerhalb weiter Grenzen die Zuordnung von Drehbewegung und Hub frei wählen. Über diese Einrichtung läßt sich die für eine bestimmte Axialbelastung notwendige Blockierkraft reduzieren.

Der Kolben führt bei einer Ausführungsform keine reine Axialbewegung im Zylinder durch, vielmehr wird er im Zylinder verschraubt. Wenn man die Drehkomponente des Kolbens mit Hilfe der Bremse unterbindet, so erreicht man auf diese Weise auch eine Beendigung der Axialbewegung und somit ein Feststellen der Arretierungsvorrichtung. Dies setzt natürlich voraus, daß die Bremsgegenfläche gegenüber dem Betätigungselement drehfest sein muß.

Dies erreicht man in weiterer Ausgestaltung der Erfindung gemäß Anspruch 2. Die dort erwähnte Bremsscheibe kann über das Betätigungselement vom Kolben abgehoben oder an diesen angelegt werden. Die notwendige axiale Verschiebbarkeit erreicht man über die undrehbare, verschiebbare Lagerung der Bremsscheibe am Kolbenstangenende. Sobald die Bremsscheibe aufgrund der Bremsfeder oder -federn an den Kolben axial angepaßt ist, kann sich dieser nicht mehr an der Kolbenstange drehen und dadurch auch nicht mehr im Zylinder verschrauben. Somit ist die Feststellung der Arretierungsvorrichtung in der gewählten Einstellage gewährleistet.

Zweckmäßigerweise bildet die Bremsscheibe zugleich einen Federteller für das zugeordnete Ende der Rückstellfeder des Kolbens bzw. der Kolbenstange. Man kann die Feder daran gemäß dem Ausführungsbeispiel ohne weiteres auch zentrieren. Dies ist insbesondere dann wichtig, wenn der Federdurchmesser geringer ist als der Zylinderinnendurchmesser.

Eine besonders bevorzugte Ausführungsform der Erfindung kennzeichnet sich dadurch aus, daß sich an der Zylinderinnenwand mindestens eine schraubenlinienförmige Führungsnut für einen bzw. je einen darin eingreifenden radialen Führungszapfen des Kolbens befindet. Der Führungszapfen übernimmt die Funktion eines Gleitsteins. Außerdem muß die Führungsnut zumindest einendig offen sein, um den bzw. die Führungszapfen "einfädeln" zu können. Wenn der oder die Führungszapfen rückziehbar sind, ist diese Maßnahme natürlich nicht erforderlich, jedoch kann sie trotzdem zweckmäßig sein.

Es ist in der Weiterbildung vorgesehen, daß eine wenigstens zweigängige Führungsnut des Zylinders vorhanden ist mit vorzugszweise rechteckigem oder trapezförmigem Querschnitt. Wenn eine hohe Axialbelastung der Kolbenstange zu erwarten ist, womit man aufgrund einer Hebelübersetzung auch bei einem Stuhl bzw. einer Stuhllehnenarretierung durchaus rechnen muß, so kann man dem durch entsprechende Profilgestaltung der Führungsnut, durch einen entsprechenden Steigungswinkel der Nut und gegebenenfalls durch eine eingängige anstatt mehrgängige Nut ohne weiteres Rechnung tragen.

In einer weiteren bevorzugten Ausführungsform ist die Kolbenstange relativ zum Kolben drehbar gelagert und der Kolben weist auf seiner Außenfläche Gewindeflanken auf, die in entsprechende Führungsnuten der Gewindehülse eingreifen und so den Kolben axial halten. Hierdurch kann der Kolben entsprechend der Steigung des Gewindes durch Drehung um seine Längsachse axial verschoben werden.

Dies hat den Vorteil, daß der Kolben in axialer Richtung etwas halt hat und daß durch die Reibung zwischen der Gewindeflanke und der Führungsnut eine erste Bremswirkung erzielt wird. Dabei ist die Steigung des Gewindes vorzugsweise so zu wählen, daß schon bei geringem Druck eine Drehung des Kolbens erfolgt. Für derartige Anwendungen ist ein leichtgängiges Trapezgewinde besonders gut geeignet.

In einer Weiterbildung ist das verstellbare Bremselement als konisch ausgebildeter Bremskonus ausgeführt, der in einem Aufnahmebereich des Kolbens angesiedelt ist, der entsprechend komplementär ausgebildet ist. In diesen Aufnahmebereich wird der Bremskonus, beispielsweise durch Federkraft so hineingedrückt, daß eine Kraftschlüssige Verbindung entsteht. Hierzu ist es vorteilhaft, wenn der Bremskonus koaxial an der Kolbenstange gelagert ist.

Die konische Ausgestaltung ermöglicht ein einfaches Einführen des Bremselementes in den Aufnahmebereich ohne verkanten und gewährleistet, daß eine größtmögliche Kontaktfläche für den erwünschten Kraftschluß zur Verfügung steht. Desweiteren ist so eine einfache Konstruktion geschaffen, die mit wenig Bauteilen auskommt, die einfach zu montieren sind und die den Kolben wirkungsvoll arretiert.

In einer ersten Weiterbildung ist der Kolben in seinem Aufnahmebereich und gegebenenfalls darüberhinaus spannzangenartig geschlitzt. Hierdurch kann der Bremskonus stärker mit dem Kolben verkeilt werden und entwickelt so einen noch stärkeren Kraftschluß. Außerdem wird der Kolben auch in der Führungsnut des Zylinders verkeilt.

Das Bremsfederelement setzt sich in dieser Ausführungsform aus mehreren, vorzugsweise fünf, in Reihe angeordneten Tellerfedern zusammen.

Um den Bremskonus axial verschieben zu können ist am Betätigungselement ein Querbolzen vorgesehen, der den Bremskonus entgegen der Kraft der Bremsfedern axial verschiebt und somit den Kraftschluß aufhebt, sobald das Betätigungselement betätigt wird. Dabei kann der Querbolzen fest oder lösbar am Betätigungselement angebracht sein.

In einer anderen, bevorzugten Ausführungsform enthält die mechanische Bremse eine das verstellbare Bremselement aufweisende Vorlastbremsvorrichtung und eine Hauptbremsvorrichtung. Durch die Unterteilung der Bremse in zwei Teilbremsen ist es möglich, die einzelnen Teilbremsen kleiner zu dimensionieren, so daß die Arretiervorrictung insgesamt noch kompakter gebaut werden kann. Der so gewonnene Freiraum kann beispielweise für eine größere und leistungsfähigere Schraubendruckfeder genutzt werden.

In einer ersten Weiterbildung dieser Ausführungsform sind an der Kolbenstange, etwa in Höhe der Mitte des Kolbens, vorzugsweise zwei, drei oder vier radial abstehende, zapfenartige Hauptbremsnocken angebracht. Diese Hauptbremsnocken sind vorzugsweise einstückig mit der Kolbenstange ausgeführt und sind in beiden axialen Richtungen über Hauptbremsfedern, die sich vorzugsweise aus mehreren in Reihe angeordneten Tellerfedern zusammensetzen, am Kolben abgestützt. Dabei ist zwischen den Tellerfedern jeder Hauptbremsfeder ein Axialkugellager angeordnet.

Diese innenliegenden Hauptbremsnocken sind verdrehsicher mit der Kolbenstange verbunden und liegen auf einem Bremsvorsprung auf, sobald die an der Kolbenstange angreifende Kraft größer als die vorgegebene Vorspannkraft der Hauptbremsfeder ist.

In dieser Ausführungsform ist die Vorlastbremsvorrichtung, also der Bremskonus, direkt auf der Rückstellfeder angeordnet, die auch gleichzeitig die Funktion des Bremsfederelementes übernimmt. Durch diese Vorlastbremsvorrichtung wird aber nur ein vergleichsweise kleines Bremsmoment erzeugt, weil die Hauptbremsvorrichtung die Hauptbremsarbeit übernimmt, so daß die Federkraft der Rückstellfeder im wesentlichen als Rückstellkraft genutzt werden kann und nur zum kleineren Teil als Bremskraft genutzt werden braucht.

Im Gegenzug kann die Vorlastbremsvorrichtung klein dimensioniert werden und nimmt nur wenig Platz ein, so daß der verbleibende Platz für die Rückstellfeder genutzt werden kann.

Mit einer kleinen Vorlastbremsvorrichtung wird gleichzeitig auch erreicht, daß die zur Betätigung des Betätigungselementes erforderlichen Kräfte klein sind, so daß eine bedienerfreundliche Arretiervorrichtung geschaffen ist.

In einer zweiten Weiterbildung dieser Ausführungsform sind an der Kolbenstange Mitnehmer angebracht, die durch den Zylinder hindurchreichen und an der außerhalb des Zylinders angeordneten Rückstellfeder anliegen. Dabei sind die Mitnehmer vorzugsweise in einem passgenauen Schlitz in der Zylinderwand geführt. Die Mitnehmer sind vorteilhafter Weise direkt an den Hauptbremsnocken angebracht.

Dies hat den Vorteil, daß die Rückstellfeder um den Zylinder herum gelegt werden kann und somit deutlich gößer dimensioniert werden kann und daß die Kolbenstange über die Hauptbremsnocken und die Mitnehmer verdrehsicher im Kolben gehalten ist.

Diesen beiden Weiterbildungsformen liegt ein Hauptgedanke zugrunde. Im Falle der Hubverstellung wird der drehbar gelagerte Kolben (Rotor) durch Rollreibung, hier vorzugsweise durch Axialkugellager geführt und gelagert, wodurch schon geringes Antriebsdrehmoment infolge Längskraft zur Betätigung ausreicht. Im Falle der Bremsung wird die Rollreibung durch eine nun einsetzende Gleitreibung überlagert, die stetig mit der Längskraft zunimmt bzw. dynamisch dem Kolbenstangenlastfall folgt. Diese dynamisch auf den Lastfall reagierende Bremse ist auch durch rollende bzw, gleitende Kolbenrotorflankenelemente realisierbar.

Weitere Ausgestaltungen dieser Arretierungsvorrichtungen sowie hieraus resultierende Wirkungsweisen und Vorteile ergeben sich aus der Beschreibung von Ausführungsbeispielen.

Die Zeichnung zeigt diese Ausführungsbeispiele der Erfindung. Hierbei stellen dar:
- Figur 1: einen abgebrochenen Längsmittelschnitt durch ein erstes Arretierelement:
- Figur 2: einen gleichfalls abgebrochenen Längsmittelschnitt durch eine zweite Ausführungsform der Erfindung;
- Figur 3: einen Schnitt gemäß der Linie III-III der Figur 2;
- Figur 4: einen Schnitt gemäß der Linie IV-IV der Figur 2;
- Figur 5: ein drittes Ausführungsbeispiel der Erfindung in einem abgebrochenen Längsmittelschnitt;
- Figur 6: einen Schnitt gemäß der Linie VI-VI der Figur 5;
- Figur 7: ein viertes Ausführungsbeispiel der Erfindung in einem abgebrochenen Längsmittelschnitt;
- Figur 8: ein fünftes Ausführungsbeispiel der Erfindung in einem abgebrochenen Längsmittelschnitt;
- Figur 9: ein sechstes Ausführungsbeispiel der Erfindung in einem abgebrochenen Längsmittelschnitt.

Die Arretiervorrichtung dient zum Feststellen einer gewählten veränderbaren Relativlage eines ersten Elements 1 gegenüber einem zweiten Element 2, beispielsweise einer SitzmöbelSitzfläche gegenüber einem Sitzmöbel-Fußgestell. In diesem Anwendungsfall wird die Höhenlage der Sitzfläche gegenüber dem Fußboden, auf welchem das Gestell aufsteht, auf die Körpergröße des Benutzers dieses Sitzmöbels eingestellt und nach dem Einstellen arretiert. Andere Anwendungsgebiete sind vorstehend genannt, wobei diese Aufzählung selbstverständlich nicht erschöpfend ist.

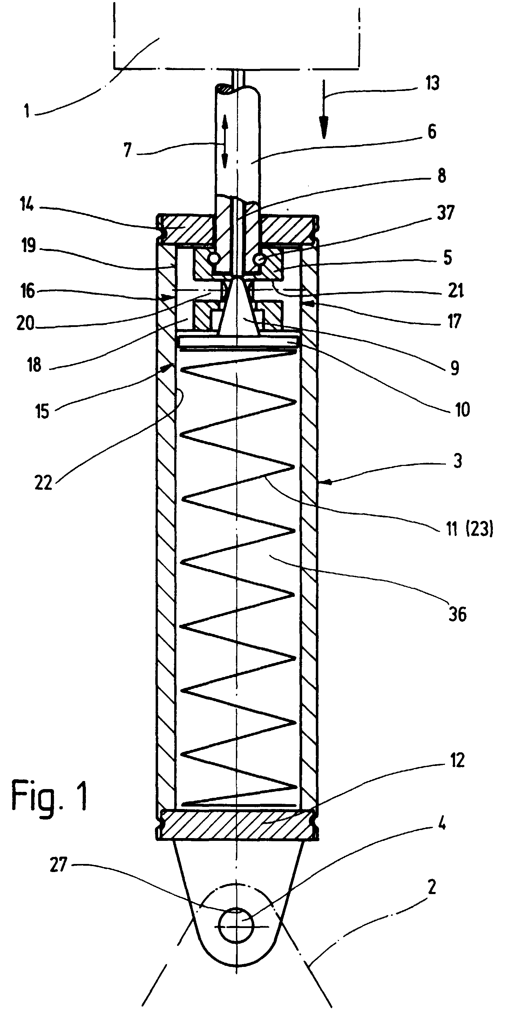

Beispielsweise am zweiten Element 2 wird ein Zylinder 3 der Arretiervorrichtung befestigt, z.B. mittels eines Zapfens 4 schwenkbar gelagert. Im Zylinder 3 ist ein Kolben 5 mit einer Kolbenstange 6 im Sinne des Doppelpfeils 7 hin und her verschiebbar. Die Kolbenstange ist also rohrförmig und in ihrem Inneren ist ein stangenartiges Betätigungselement 8 verschiebbar. An seinem inneren Ende trägt es in Figur 1 einen Betätigungskonus 9, wobei dessen im Durchmesser kleineres Ende mit dem zugeordneten Ende des Betätigungselements 8 verbunden oder auch einstückig hergestellt ist. Das im Durchmesser größere Ende des Betätigungskonus 9 geht in einen flachen gegebenenfalls auch einstückig angeformten Teller 10 über. Sein Durchmesser ist beim Ausführungsbeispiel mit dem üblichen Spiel etwa gleich groß wie der Innendurchmesser des Zylinders 3. An diesem Teller 10 stützt sich das eine Ende einer Rückstellfeder 11 ab. Ihr anderes, in Figur 1 unteres Ende liegt am Zylinderboden 12 an bzw. ist bei Vorspannung der Feder dort angepreßt. Wenn also die Kolbenstange 6 im Sinne des Pfeils 13 nicht belastet oder die Belastung nur gering ist, so nimmt der Kolben 5 gemäß Figur 1 eine Endlage ein, in welcher er vor dem anderen Zylinderboden 14 steht, welcher von der Kolbenstange 6 nach außen hin durchsetzt wird.

Die Arretierungsvorrichtung ist erfindungsgemäß mit einer mechanischen Bremse 15 ausgestattet. Diese besitzt wenigstens ein verstellbares Bremselement. Beim Ausführungsbeispiel der Figur 1 sind zwei derartige Bremselemente 16, 17 vorgesehen. Es handelt sich im speziellen Falle jeweils um einen Bremsbacken 18 mit einer kreiszylinderförmig gewölbten Bremsfläche 19, der an seiner Rückseite einen Lagerzapfen 20 trägt. Mit diesem ist er in einer radialen Bohrung 21 des Kolbens 5 in radialer Richtung verschiebbar. Das innere Lagerzapfenende ist gemäß Figur 1 jeweils ballig. Zwischen die balligen Enden aller Lagerzapfen bzw. Bremsbacken 18 greift das im Durchmesser kleinere Ende das Betätigungskonus 9. Es ist leicht einsehbar, daß man durch Verschieben des Betätigungselements 8 entgegen dem Pfeil 13 die Lagerzapfen 20 nach außen verschieben kann und dadurch die Bremsflächen 19 der Bremsbacken 18 an die Innenwandung 22 des Zylinders 3 angepreßt werden. Dies führt in der angestrebten Weise zu einer Bremswirkung, die so groß ist, daß jede im Sinne des Pfeils 13 auf die Kolbenstange 6 aufgegebene Belastung mit Hilfe dieser mechanischen Bremse 15 aufgefangen werden kann.

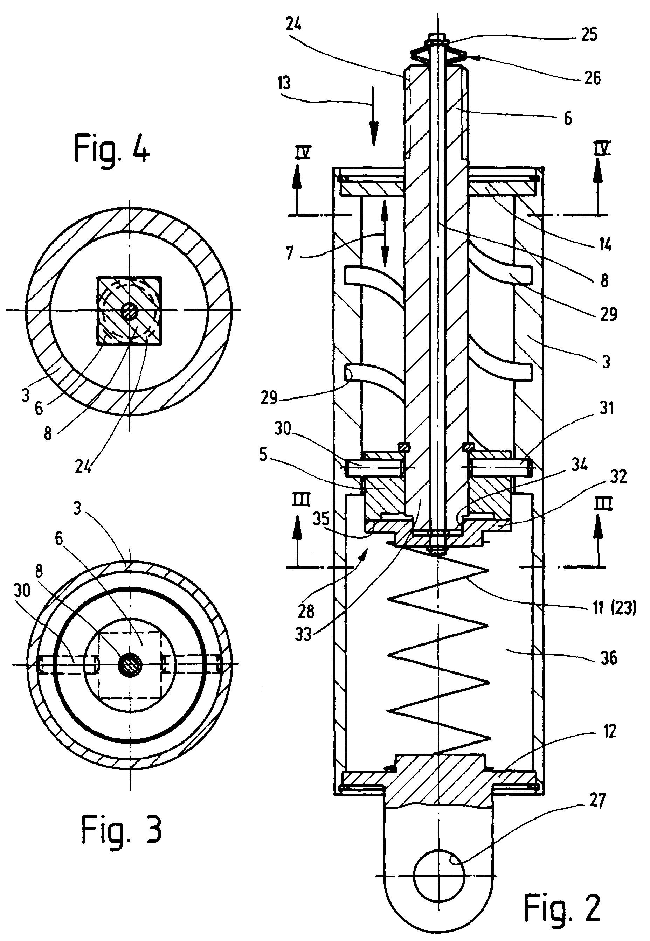

Die Belastungskraft entgegen dem Pfeil 13 ist eine Federkraft. Falls keine zusätzlichen Federn vorhanden oder vorgesehen sind, übernimmt die Rückstellfeder 11 zugleich auch die Aufgabe einer Bremsfeder 23. Man kann jedoch, wie beim Ausführungsbeispiel der Figur 2 gezeigt, zwischen das freie Ende der Kolbenstange 6, welches beispielsweise auch mit einem Bolzengewinde 24 versehen sein kann und einen Bund- oder Stützring 25 am Betätigungselement 8 eine oder mehrere separate Bremsfedern 26 einfügen, beispielsweise ein Tellerfederpaket. Die Bremsfedern üben eine ständige, entgegen dem Pfeil 13 wirkende Kraft auf das Betätigungselement 8 aus.

Wenn man in Figur 1 die mechanische Bremse 15 durch leichtes Einwirken auf das Betätigungselement 8 im Sinne des Pfeils 13 löst, so läßt sich durch eine entsprechende Einwirkung auf die Kolbenstange 6 diese zusammen mit dem Kolben 5 und der mechanischen Bremse 15 nach oben oder nach unten verschieben. Die Verschiebebewegung läuft ruckfrei an und ist mit der Bewegung einer Gasdruckfeder vergleichbar. In nicht dargestellter Weise kann man den Teller 10 im Durchmesser kleiner wählen und auf diesen lediglich die Bremsfeder 23 einwirken lassen. Diese befindet sich dann konzentrisch innerhalb einer Belastungsfeder 11, die am Teller 10 vorbeigeht und sich dann am unteren Ende des Kolbens 5 abstützt. Die Bremsbacken müssen in diesem Falle nach unten hin etwas kleiner sein, damit die Belastungsfeder nur am Kolben 5 und nicht auch an den Bremsbacken angreifen kann.

Denkbar sind auch zwei hintereinander geschaltete Federn, wobei sich die Bremsfeder in einer Dose an der Unterseite einer Bremsscheibe 32 des zweiten Ausführungsbeispiels befindet.

Beim Ausführungsbeispiel der Figur 2 sind das erste Element 1 und das zweite Element 2 nicht eingezeichnet. Man erkennt jedoch auch dort die untere Lagerlasche des Zylinders 3 mit der Bohrung 27 zur Aufnahme des Zapfens 4 der Figur 1.

Während beim ersten Ausführungsbeispiel (Figur 1) die mechanische Bremse 15 zwischen dem Kolben 5 und den Zylinder 3 geschaltet ist, ist bei der zweiten Variante (Figur 2) eine mechanische Bremse 28 vorgesehen, welche zwischen den Kolben 5 und das Betätigungselement 8 geschaltet ist. Hierzu ist es notwendig, daß der Kolben 5 drehbar an der Kolbenstange 6 gelagert ist und er eine gesteuerte Drehbewegung im Zylinder 3 ausführt. Mit anderen Worten, das Verschieben des Kolbens 5 im Zylinder 3 im Sinne des Doppelpfeils 7 ist nur über eine überlagerte Drehbewegung des Kolbens im Zylinder 3 möglich. Zu diesem Zwecke ist in die Zylinderwandung innen eine Führungsnut 29 eingearbeitet, die durchaus mehrgängig jedoch auch eingängig sein kann. Beim Ausführungsbeispiel der Figur 2 ist eine zweigängige Führungsnut mit rechteckigem Profil vorgesehen. In jede dieser Führungsnuten greift ein radial über den Kolben vorstehender Führungszapfen 30 bzw. 31 ein. Eine axiale Verschiebung der Kolbenstange 6 im Sinne des Pfeils 13 oder in Gegenrichtung bewirkt somit ein Drehen des Kolbens um das untere der Kolbenstange 6, wobei die Führungszapfen 30 und 31 dem zugehörigen Abschnitt der Führungsnut oder -nuten 29 durchlaufen.

Diese Drehbewegung kann mit Hilfe der erwähnten Bremsscheibe 32 unterbunden werden, die in axialer Richtung verschiebbar aber undrehbar am unteren Ende (Figur 2) der Kolbenstange 6 gelagert ist. Dieses untere freie Ende der Kolbenstange 6 ist mit einem Mehrkant 33, beispielsweise einem Vierkant, ausgestattet. Die Bremsscheibe 32 besitzt eine dementsprechende Mehrkantaufnahme 34 und außerdem noch eine Durchgangsbohrung für das untere Ende des Betätigungselements 8. Letzteres kann beispielsweise mit Hilfe zweier beidseits angeordneter Sicherungsringe axial am unteren des Betätigungselements 8 gehalten werden.

Die Bremsscheibe 32 wird beim Ausführungsbeispiel der Figur 2 mit Hilfe der Rückstellfeder 11, aber auch der zusätzlichen Bremsfedern 26 an die Unterseite des Kolbens 5 angepreßt, der beim Ausführungsbeispiel eine ringförmige Bremsgegenfläche 35 aufweist. Drückt man das Betätigungselement 8 in Pfeilrichtung 13 nieder, so hebt die Bremsscheibe 32 von der Bremsgegenfläche 35 etwas ab und dann läßt sich durch Einwirken auf die Kolbenstange, im Sinne des Pfeils 13 oder in Gegenrichtung, der Kolben 5 im Zylinder 3 verschrauben, wodurch man eine andere Relativlage des ersten Elements 1 gegenüber dem zweiten Element 2 erzielt. Sobald man das Betätigungselement 8 freigibt, wird die mechanische Bremse 28 wieder eingerückt und dadurch das Verdrehen des Kolbens 5 im Zylinder 3 unterbunden.

In der vorstehend geschilderten Weise kann man auch bei dieser Variante im Zylinderraum 36 zwei konzentrische Federn vorsehen, wobei die äußere die Belastungsfeder 11 für den Kolben bildet und die innere die Bremsfeder 23 ist. Die Dimensionierung im Bereich der mechanischen Bremse 28 muß dementsprechend abgeändert werden.

Es ist ohne weiteres einleuchtend, daß man auch beim Ausführungsbeispiel der Figur 1 am Kolben 5 beispielsweise zwei um 180° versetzte Führungszapfen 30 und 31 vorsehen kann, die dann auf Lücke zwischen den beiden ebenfalls um 180° versetzten Bremselementen 16 und 17 angeordnet sind. Auch dort kann man den Zylinder 3 innen mit einer ein- oder mehrgängigen Führungsnut 29 versehen. Dann ist es selbstverständlich notwendig, daß auch bei dieser Variante der Kolben 5 drehbar an der Kolbenstange 6 gelagert ist. Man erreicht dies beispielsweise in der schematisiert angedeuteten Weise, mit Hilfe eines im Querschnitt kreisförmigen Sprengrings 37 oder auf andere bekannte Art.

Wenn man in der vorstehend geschilderten Weise der Hubbewegung des Kolbens im Zylinder 3 eine gesteuerte Drehbewegung überlagert, so führt dies in Abhängigkeit von der Steigung zu einer mehr oder weniger starken Verringerung der notwendigen Bremskraft beim Arretieren des ersten Elements 1 gegenüber dem zweiten Element 2 bzw. umgekehrt. Die auf die Kolbenstange 6 aufgegebene Belastungskraft bzw. eine auf den Zylinder 3 aufgegebene Belastungskraft wird nämlich aufgrund dieser Zwangsführung des Kolbens 5 in eine von der Nutneigung abhängige kleinere Kraft längs der Nut oder Nuten umgesetzt, so daß die Bremskraft der mechanischen Bremse 15, 28 nur noch diese reduzierte Kraft aufnehmen muß. Dadurch kommt man mit einer geringeren Brems- bzw. Belastungsfeder aus.

Aus den Figuren 2 bis 4 ergibt sich, daß man die Kolbenstange 6 beispielsweise aus Vierkantmaterial herstellen kann. Im Bereich des oberen Zylinderbodens 14 des äußeren, mit dem Gewinde 24 versehenen Endes, und auf der anderen Seite im Bereich des Kolbens 5 kann man einen kreiszylindrischen Querschnitt vorsehen. Durch das Abdrehen entsteht automatisch eine Schulter zum Anlegen des oberen Kolbenendes.

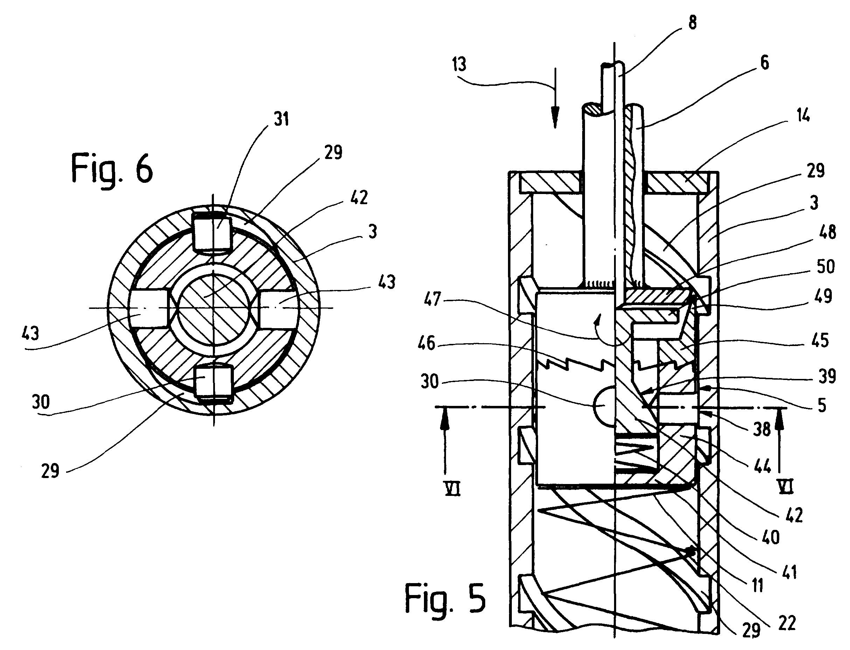

Figur 5 zeigt eine dritte Ausführungsform der Erfindung. Auch hierbei ist zwischen den Kolben 5 und den Zylinder 3 eine mechanische Bremse 38 geschaltet. Sie weist einen Bremskörper 39 auf, der sich zentrisch im Inneren des topfförmigen Kolbens 5 befindet. Er wird durch eine Bremsfeder 40 belastet, d.h. gegen das innere Ende des Betätigungselements 8 gedrückt. Das eine Ende der Bremsfeder stützt sich am Boden 41 des Kolbens 5 ab, während das andere Ende gegen die untere, im Durchmesser größere Seite des konischen Druckkörpers 42 am in Figur 5 unteren Ende des Bremskörpers 39 gepreßt wird.

Bei diesem Ausführungsbeispiel sind am Kolben 5 zwei um 180° versetzte Führungszapfen 30 und 31 angebracht, die je in eine Führungsnut 29 der Kolbeninnenwandung eingreifen, wobei es sich in soweit um eine zweigängige Führungsnut handelt. Infolgedessen kann der Kolben nicht einfach in Achsrichtung des Zylinders verschoben werden, vielmehr muß er in Übereinstimmung mit der Beschreibung des Ausführungsbeispiels gemäß Figur 2 im Zylinder verschraubt werden. Um 90° zu den beiden Führungszapfen 30 und 31 sind am Kolben 5 noch zwei gegeneinander ebenfalls um 180° versetzte Bremsstifte 43 vorgesehen, die allerdings im Gegensatz zu den Führungszapfen in radialer Richtung verschiebbar am Kolben bzw. der Kolbenwandung gelagert sind. Jeder hat in bevorzugter Weise innen eine Kegelspitze, während sein äußeres Ende vorzugsweise leicht ballig ist. Gemäß Figur 6 befinden sich alle Bremsstifte und alle Führungszapfen in der gleichen Radialebene. Während aber die Führungszapfen 30, 31 in die Führungsnuten 29 eingreifen, liegen die äußeren Enden der Bremsstifte 43 - wegen des 90°-Versatzes - in Figur 5 oberhalb der Führungsnuten an der Zylinderinnenwandung 22 an. Aufgrund der Wirkung der Bremsfeder 40 werden die Bremsstifte 43 an die Zylinderinnenwandung angepreßt, und dadurch wird die Drehung des Kolbens 5 im Zylinder 3 verhindert.

Soll diese mechanische Bremse gelöst werden, so muß man mit Hilfe des Betätigungselements 8 durch Niederdrücken in Pfeilrichtung 13 den Bremskörper 39 gegen den Widerstand der Bremsfeder 40 gegen den Kolbenboden 41 hindrücken. Dadurch entfällt dann die radiale nach außen gerichtete Kraft an den Bremsstiften 43, und infolgedessen kann sich jetzt der Kolben 5 im Zylinder 3 drehen bzw. gegenüber dem Zylinder verschraubt werden. Sobald man das Betätigungselement freigibt, wirkt sich die Kraft der Bremsfeder 40 wieder aus, und der Kolben kommt zum Stillstand. Damit ist dann das zweite Element 2 gegenüber dem ersten Element 1 arretiert.

Der Kolben 5 besteht bei diesem Ausführungsbeispiel aus zwei Teilen, nämlich dem im wesentlichen topfförmigen ersten Kolbenteil 44 und dem im wesentlichen ringförmigen zweiten Kolbenteil 45. Beide sind über eine kranzförmige Sägezahnverzahnrnng 46 miteinander gekoppelt. An Stelle der Sägeverzahnung wäre auch ein Freilauf oder ein anderes, in eine Drehrichtung sperrendes Elementenpaar denkbar.

Drückt man beispielsweise bei geöffneter Bremse die Kolbenstange im Sinne des Pfeils 13 nieder, was man durch starke Belastung der Sitzfläche des Sitzmöbels erreicht, so drückt ein konischer Außenbund 48 am unteren Ende der Kolbenstange 6 gegen die konische Innenfläche eines nach oben vorstehenden Randes 49 des zweiten Kolbenteils 45, welcher den Außenbund 48 anliegend umfaßt, wodurch der Außenbund 48 und das zweite Kolbenteil 45 reibschlüssig miteinander verbunden werden. Die Belastung der Kolbenstange 6 in Pfeilrichtung 13 überträgt sich über die Sägezahnverzahnung 46 auf den ersten Kolbenteil 44 mit den Führungszapfen 30 und 31. Diese laufen entlang den Führungnuten 29 nach unten, was eine Drehung des gesamten Kolbens 45 zur Folge hat. Weil der Außenbund 48 der Kolbenstange 6, welcher beispielsweise gemäß Figur 5 auch durch einen angeschweißten Teller gebildet sein kann, keine Drehbewegung ausführt, bewirkt die nach unten gerichtete Schraubbewegung des Kolbens 5 einen Reibungswiderstand am Übergang vom Außenbund 48 zum Rand 49, was eine gebremste Drehbewegung zur Folge hat, wobei selbstverständlich die Rückstellfeder 11, welche dabei zusammengedrückt wird, ebenfalls der Abwärtsbewegung entgegengewirkt.

Gibt man hingegen das erste Element 1, also beispielsweise den Sitz eines Sitzmöbels frei, so daß sich die Kraft der Rückstellfeder auswirken kann, so wird der Kolben 5 wieder nach oben verschraubt. Wegen der Sägezahnverzahnung 46 kann sich dabei aber der erste Kolbenteil 44 relativ zum zweiten Kolbenteil 45 drehen, wobei der zweite Kolbenteil 45 durch den erwähnten Reibschluß am Übergang zum Außenbund 48 drehfest gehalten wird. Es muß also an dieser Stelle der Reibungswiderstand von Außenbund 48 und Rand 49 nicht überwunden werden. Dadurch kommt man mit einer schwächer dimensionierten Rückstellfeder 11 aus.

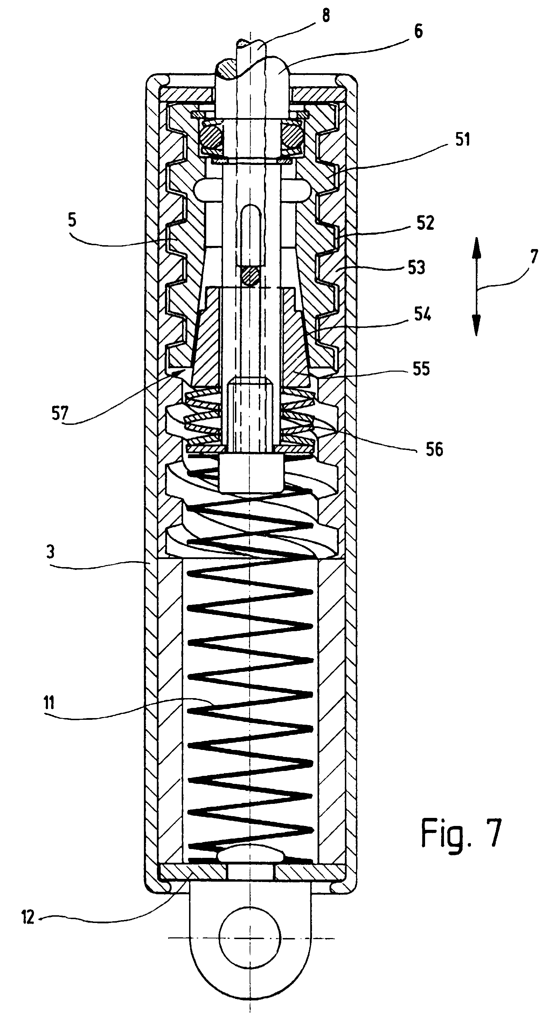

Die in den Figuren 7 bis 9 gezeigten Ausführungsbeispiele haben allesamt an den Kolben 5 angeformte Gewindeflanken 51, die die Außenseite der Kolben 5 schraubenförmig umkreisen. Die Gewindeflanken 51 greifen in entsprechen ausgebildete Führungsnuten 52 in einer Gewindehülse 53 im Zylinder 3 ein. In den Führungsnuten 52 ist der Kolben 5 drehbar glagert, wobei die Gewindeflanken 51 und die Führungsnuten 52 als leichtgängiges Trapezgewinde ausgebildet ist, so daß bereits bei einer geringen, am Kolben 5 angreifenden Axialkraft dieser in Drehung versetzt wird.

Bei diesen Ausführungsformen ist im Kolben 5 ein sich konisch verjüngender Aufnahmebereich 54 zur Aufnahme eines ebenfalls konisch ausgebildeten Bremskonus 55 vorhanden, wobei der Aufnahmebereich 54 und der Bremskonus 55 komplementär zueinander ausgebildet sind. Der Bremskonus 55 ist durch ein Bremsfederelement 56 kraftschlüssig in der Aufnahme 54 gehalten und erzeugt so ein Bremsmoment zur Arretierung des Kolbens 5 im Zylinder 3.

Die in Figur 7 gezeigte vierte Ausführungsform einer erfindungsgemäßen Arretiervorrichtung hat eine mechanische Bremse 57, bei der der Aufnahmebereich 54 einen spannzangenartig geschlitzten Kolben 5 aufweist, der den Bremskonus 55 kraftschlüssig aufnimmt und in den Führungsnuten 52 verklemmt. Der Bremskonus 55 ist über ein Bremsfederelement 56 aus fünf in Reihe geschalteten Tellerfedern 58 an der Kolbenstange 6 gelagert.

In dieser Ausführungsform greift die Rückstellfeder 11 am freien Ende der Kolbenstange 6 an und drückt den Bremskonus 55 der mechanischen Bremse 57 in den konischen Aufnahmebereich 54. Hierdurch wird der spannzangenartig geschlitzte Aufnahmebereich 54 auseinandergedrückt und verklemmt in der Führungsnut 52. Gleichzeitig wird der Bremskonus 55 kraftschlüssig in dem Aufnahmebereich 54 gehalten.

Die derart auf den Kolben 5 wirkenden Axialkräfte erzeugen über die Gewindeflanken 51 ein Drehmoment am Kolben 5, welches über die mechanische Bremse 57 abgebremst wird, so daß der Kolben 5 in seiner Position verharrt.

Durch betätigen des Betätigungselemtes 8 wird über einen am Betätigungselement 8 angebrachten Querbolzen 59 eine Axialkraft in den Bremskonus 55 eingeleitet, die diesen axial verschiebt und den Kraftschluß zwischen dem Kolben 5 und dem Bremskonus 55 aufhebt. Nun ist der Kolben 5 ungebremst und die durch die Rückstellfeder 11 eingebrachten Axialkräfte werden über das Trapezgewinde in Drehmomente umgewandelt und versetzen den Kolben 5 in Drehung. Durch diese Drehbewegung schraubt sich der Kolben 5 und somit auch die am Kolben 5 angebrachte Kolbenstange 6 in die Höhe.

Wird nun beispielsweise dadurch, daß sich jemand auf den Stuhl setzt, über die Kolbenstange 6 eine Axialkraft, in die Arretiervorrichtung eingeleitet, die größer als die Federkraft der Rückstellfeder 11 ist, so wird der Kolben 5 in die entgegengesetzte Richtung gedrehte und bewegt sich nach unten.

In dieser Ausführungsform ist die Kolbenstange 6 über ein Kolbenstangenkugellager 60 am Kolben 5 gelagert. Dabei läßt sich der Kolben 5 gegenüber der Kolbenstange 6 verdrehen.

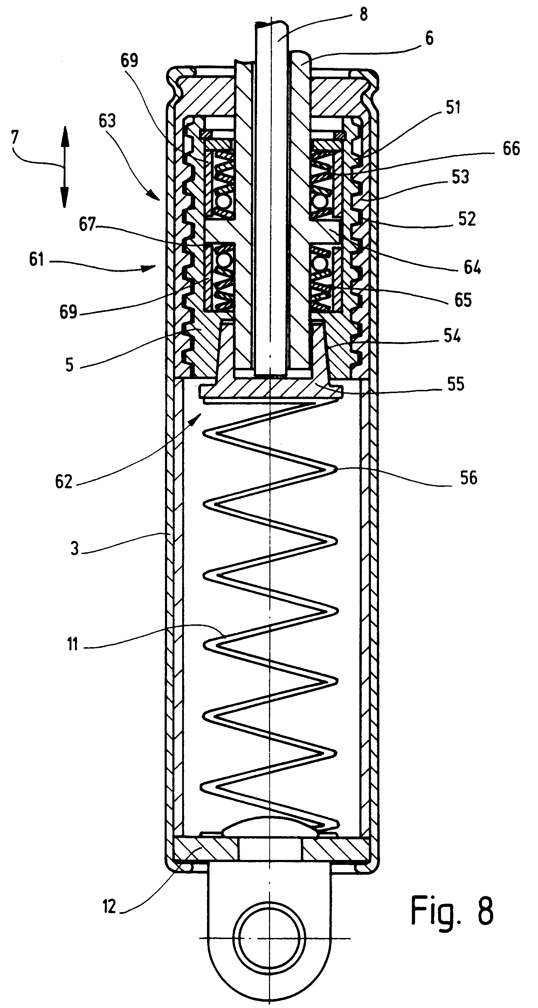

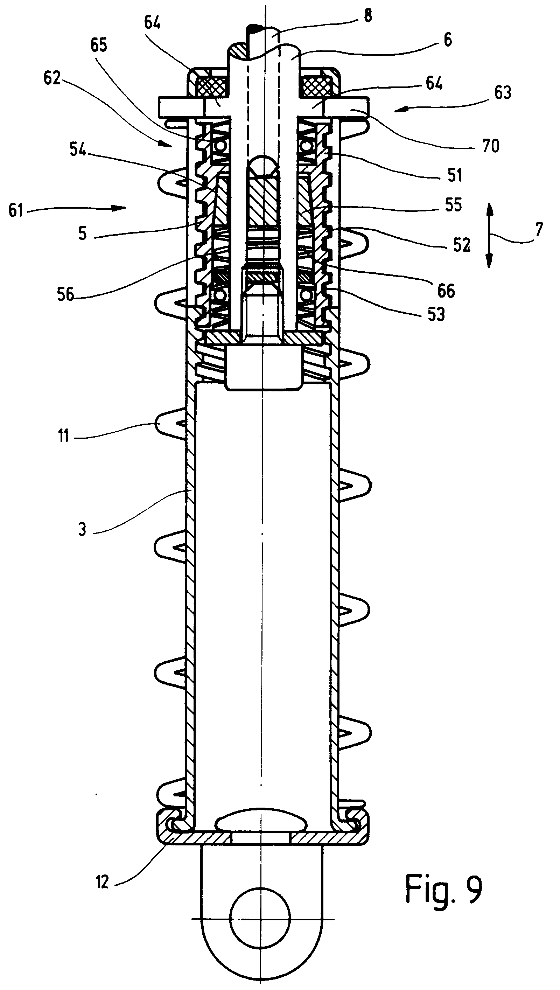

Die in den Figuren 8 und 9 gezeigten Ausführungsformen haben eine mechanische Bremse 61, die aus einer Vorlastbremsvorrichtung 62 und einer Hauptlastbremsvorrichtung 63 zusammengesetzt ist.

Die Vorlastbremsvorrichtung 62 entspricht im wesentlichen der mechanischen Bremse 57 gemäß Figur 7, ist jedoch deutlich kleiner dimensioniert. Im Unterschied zur mechanischen Bremse 57 gemäß Figur 7 sind in der Vorlastbremsvorrichtung 62 die Kolben 5 nicht geschlitzt und in der fünften Ausführungsform gemäß Figur 8 entfällt die Bremsfeder. Hier übernimmt die am Bremskonus 55 angreifende Rückstellfeder 11 diese Funktion mit.

Die Hauptlastbremsvorrichtung 63 umfaßt zwei quer zur Kolbenstangenlängsrichtung an der Kolbenstange 6 angebrachte Hauptbremsnocken 64, zwei Hauptbremsfedern 65 und 66, die die Kolbenstange 6 am Kolben 5 abstützen, sowie einen Bremsvorsprung 67, auf den die Hauptbremsnocken 64 auflegbar sind.

Die in Figur 8 gezeigte fünfte Ausführungsform einer erfindungsgemäßen Arretiervorrichtung hat eine Hauptlastbremsvorrichtung 63, bei der die Hauptbremsnocken 64 etwa in der Mitte des Kolbens 5 angesiedelt sind. An den Hauptbremsnocken 64 schließen sich beidseitig die Hauptbremsfedern 65 und 66 an. Die Hauptbremsfeder 65 und 66 sind aus jeweils fünf in Reihe angeordneten Tellerfedern 58 gebildet, wobei zwischen den Tellerfedern 58 ein Axialkugellager 68 integriert ist. Die Hauptbremsnocken 64 reichen bis nahe an den Kolben 5 heran und gelangen auf einem als Hauptbremshülse 69 ausgebildeten Bremsvorsprung 67 zur Anlage, falls die auf die Kolbenstange 6 axial einwirkende Kraft die Tellerfedern 58 der Hauptbremsfeder 65 genügend zusammendrückt.

Bei der in Figur 9 gezeigten sechsten Ausführungsform einer erfindungsgemäßen Arretiervorrichtung hat sind die Hauptbremsnocken 64 außerhalb des Kolben 5 angeordnet und kommen an einem freien Ende des Kolbens 5 ausgebildeten Bremsvorsprung 67 in Anschlag, falls die auf die Kolbenstange 6 axial einwirkende Kraft die Tellerfedern 58 der Hauptbremsfeder 65 genügend zusammendrückt. Hierdurch sind Hauptbremshülsen, wie sie in der Ausführungsform gemäß Figur 8 verwendet werden obsolet.

Darüberhinaus sind in dieser Ausführungsform an die Hauptbremsnocken 64 sich radial erstreckende Mitnehmer 70 angebracht, die durch einen entsprechenden Schlitz im Zylinder 3 hindurchreichen und an einer außerhalb des Zylinders 3 angeordneten Rückstellfeder 11 anliegen.

Die mechanischen Bremsen 61 der fünften und sechsten Ausführungsform arbeiten wie folgt:

Nachdem in die Kolbenstange 6 eine Last eingeleitet wird, beispielsweise weil sich eine Person auf den Stuhl setzt, wird die so erzeugte Kraft über die Tellerfedern 58 der Hauptbremsfeder 65 größtenteils an den Kolben 5 weitergegeben. Diese am Kolben 5 in axialer Richtung angreifende Kraft wird über das Gewinde unter Reibungsverlusten in ein Drehmoment umgewandelt. Gleichzeitig werden die Tellerfedern 58 zusammengedrückt.

Dieses am Kolben 5 angreifende Drehmoment ist noch vergleichsweise klein, da schon eine geringe last ausreicht, die Tellerfedern 58 zusammenzudrücken und kann vom Bremskonus 55 gehalten werden.

Sobald die Tellerfedern 58 um einen bestimmten, vorgegebenen Federweg zusammengedrückt sind, liegen die Hauptbremsnocken 64 auf dem Bremsvorsprung 67 auf. Dieser Bremsvorsprung 67 ist in der fünften Ausführungsform gemäß Figur 8 als einzelne, einlegbare Hauptbremshülse 69 ausgeführt. Die nun entstehende Reibung zwischen den Bremsnocken 67 und der Hauptbremshülse 69 erhöht das am Kolben 5 anliegende Bremsmoment und arretiert den Kolben 5 zuverlässig.

Dieses Bremssystem arbeitet selbstverstärkend, da mit zunehmender Last auch die Reibung zwischen Hauptbremsnocke 64 und Hauptbremshülse 69 zunimmt und folglich auch das Bremsmoment.

Ist eine Höhenverstellung der Vorrichtung erwünscht, so ist das Betätigungselement 8 in gewohnter Weise zu bedienen, so daß der Bremskonus 55 den Kolben 5 freigibt. Nun reicht eine vergleichsweise geringe Last bzw. Kraft aus, um den Kolben 5 zu verdrehen, da das in der Hauptbremsfeder 65 angeordnete Axialkugellager 68 die Reibung zwischen der Kolbenstange 6 und dem Kolben 5 gering hält.

## Patentansprüche

1. Arretiervorrichtung zum Feststellen der gewählten Relativlage eines einstellbaren ersten Elements (1) gegenüber einem zweiten Element (2), beispielsweise eines Sitzmöbel-Sitzes gegenüber einem Sitzmöbel-Fußgestellt, mit einem am zweiten Element (2) befestigten Zylinder (3), in welchem ein mit dem ersten Element (1) verbundenes Distanzelement in der Verschieberichtung (13) gegen den Widerstand mindestens einer Rückstellfeder (11) verschiebbar ist oder umgekehrt, wobei die Verschiebbewegung (7) in jeder Verschiebelage blockierbar und mittels eines Betätigungselements (8) freigebbar ist, und mit einer mindestens ein verstellbares Bremselement (16, 17, 32, 43) aufweisenden mechanischen Bremse (15, 28, 38, 57, 61), durch die das Betätigungselement (8) gegen den Widerstand wenigstens einer Bremsfeder (23, 26, 40, 56, 65, 66) in eine Freigabestellung bringbar oder freigebbar ist, wobei das Distanzelement als Kolbenstange (6) ausgeführt ist, welche vom Betätigungselement (8) axial nach außen hin durchsetzt ist, und daß die Kolbenstange (6) mit einem Kolben (5) in Wirkverbindung steht, der durch die mechanische Bremse (15, 28, 38, 57, 61) arretierbar ist, **dadurch gekennzeichnet**, daß die mechanische Bremse (28) zwischen den Kolben (5) und das Betätigungselement (8) geschaltet und der Kolben (5) im Zylinder (3) verschraubbar ist, wobei die mechanische Bremse ( 28) insbesondere eine in Achsrichtung der Kolbenstange (6) wirkende Reibungsbremse ist.

2. Arretiervorrichtung zum Feststellen der gewählten Relativlage eines einstellbaren ersten Elements (1) gegenüber einem zweiten Element (2), beispielsweise eines Sitzmöbel-Sitzes gegenüber einem Sitzmöbel-Fußgestellt, mit einem am zweiten Element (2) befestigten Zylinder (3), in welchem ein mit dem ersten Element (1) verbundenes Distanzelement in der Verschieberichtung (13) gegen den Widerstand mindestens einer Rückstellfeder (11) verschiebbar ist oder umgekehrt, wobei die Verschiebbewegung (7) in jeder Verschiebelage blockierbar und mittels eines Betätigungselements (8) freigebbar ist, und mit einer mindestens ein verstellbares Bremselement (16, 17, 32, 43) aufweisenden mechanischen Bremse (15, 28, 38, 57, 61), durch die das Betätigungselement (8) gegen den Widerstand wenigstens einer Bremsfeder (23, 26, 40, 56, 65, 66) in eine Freigabestellung bringbar oder freigebbar ist, wobei das Distanzelement als Kolbenstange (6) ausgeführt ist, welche vom Betätigungselement (8) axial nach außen hin durchsetzt ist, und daß die Kolbenstange (6) mit einem Kolben (5) in Wirkverbindung steht, der durch die mechanische Bremse (15, 28, 38, 57, 61) arretierbar ist, wobei die mechanische Bremse (15, 38) zwischen den Kolben (5) und den Zylinder (3) geschaltet ist, und am Kolben (5) sich mindestens ein quer zu dessen Längsachse bewegbares Bremselement (16, 17) befindet, das in seiner wirksamen Stellung an die Zylinderinnenwandung (22) angepreßt ist, wobei jedes Bremselement (16 , 17) aus einem Bremsbacken (18) mit kreiszylinderförmig gewölbter Bremsfläche (19) und einem an dessen Rückseite befindlichen Lagerzapfen (20) besteht, der in einer radialen Kolbenbohrung (21) verschiebbar gelagert ist und an dessen innerem Ende ein Betätigungskonus (9) anliegt oder anlegbar ist, welcher sich am inneren Ende des Betätigungselements (8) befindet, wobei das im Durchmesser kleinere Konusende mit dem Betätigungselement (5) verbunden ist, und daß die Rückstellfeder (11) für den Kolben (5) bzw. die Kolbenstange (6) zugleich die Bremsfeder (23) bildet und einenends am Zylinderboden (12) und anderenendes am Betätigungskonus (9) anliegt, wobei das im Durchmesser größere Konusende in einen flachen, im Zylinder (3) geführten Teller (10) übergeht oder damit verbunden ist, dadurch gekennzeichnet, daß der Kolben (5) drehbar, aber axial unverschiebbar an der Kolbenstange (6) gelagert ist, wobei der Kolben (5) beim Verschieben im Zylinder (3) eine gesteuerte Drehbewegung ausführt und/oder die Kolbenstange (6) relativ zum Zylinder (3) verdrehsicher gelagert ist.

3. Vorrichtung nach Anspruch 2, dadurch gekennzeichnet, daß sich am inneren Ende des Betätigungselements (8) eine verschiebbar, aber undrehbar am kolbenseitigen Kolbenstangenende (33) geführte Bremsscheibe (32) befindet, und das zugeordnete Ende des Kolbens (5) die Bremsgegenfläche (35) bildet oder aufweist, wobei der Kolben (5) drehbar, aber unverschiebbar an der Kolbenstange (6) gelagert ist, wobei die Bremsscheibe (32) zugleich einen Federteller für das zugeordnete Ende der Rückstellfeder (11) des Kolbens (5) bzw. der Kolbenstange (6) bildet.

4. Vorrichtung nach einem der Ansprüche 2 oder 3, dadurch gekennzeichnet, daß sich an der Zylinderinnenwand (22) mindestens eine schraubenlinienförmige Führungsnut (29) des Zylinders (3) mit vorzugsweise rechteckigem oder trapezförmigem Querschnitt für einen bzw. je einen darin eingreifenden radialen Führungszapfen (30, 31) des Kolbens (5) befindet, wobei zwischen das äußere Ende oder einen äußeren Bereich des Betätigungselements (8) und das äußere Ende der Kolbenstange (6) die mindestens eine Bremsfeder (26) oder ein Tellerfederpaket geschaltet ist.

5. Vorrichtung nach Ansprüche 1, dadurch gekennzeichnet, daß sich am Kolben (5) zwei jeweils um 180° versetzte Bremsbacken (18) und Führungszapfen (30, 31) befinden, wobei die Führungszapfen auf Lücke zu den Bremsbacken angeordnet sind.

6. Vorrichtung nach Anspruch 1 oder 2, dadurch gekennzeichnet, daß sich im Kolbeninnern eine gegen die Kolbenstange hin durch eine Bremsfeder (40) federbelasteter Bremskörper (39) mit einem sich gegen die Kolbenstange (6) hin verjüngenden konischen Druckkörper (42) befindet, an dem mindestens ein radial am Kolben (5) verschiebbar gelagerter Bremsstift (43) anliegt, dessen äußeres Ende durch die Bremsfeder (40) an die Zylinderinnenwand (42) angepreßt ist, wobei der Bremskörper (39) mittels des Betätigungselements (8) gegen den Widerstand der Bremsfeder (40) verschiebbar ist, und daß der Kolben (5) im Zylinder (3) verschraubbar geführt sowie durch eine Belastungsfeder (11) gegen die Kolbenstange (6) hin federbelastet sowie relativ zur Kolbenstange (6) um die zentrische Längsachse drehbar ist und sich an der Zylinderinnenwand (22) mindestens eine schraublinienförmige Führungsnut (29) für eine bzw. je einen darin eingreifenden radialen Fürhungszapfen (30, 31) des Kolbens (5) befindet, wobei sich die Führungszapfen (30, 31) und die Bremsstifte (43) etwa in der gleichen Kolbenebene befinden, und wobei insbesondere desweiteren zwischen zwei benachbarten Bremsstiften (43) ein Führungszapfen (30, 31), vorzugsweise mittig, angeordnet ist.

7. Vorrichtung nach Anspruch 6, dadurch gekennzeichnet, daß der Kolben (5) zweiteilig ausgebildet ist, wobei sein einer Kolbenboden (41) für die Bremsfederabstützung aufweisender erster Kolbenteil (44) mit dem der Kolbenstange zugeordneten zweiten Kolbenteil (45) über eine axiale kranzförmige Sägezahnverzahnung (46) gekuppelt ist.

8. Vorrichtung nach Anspruch 7, dadurch gekennzeichnet, daß sich am inneren Ende der Kolbenstange (6) ein Außenbund (48) oder dergeichen befindet, der vom zugeordneten Rand (49) des zweiten Kolbenteils (45) mit Reibschluß umfaßt ist.

9. Vorrichtung nach Anspruch 1, dadurch gekennzeichnet, daß die Kolbenstange (6) relativ zum Kolben (5) drehbar in diesem gelagert ist.

10. Vorrichtung nach einem der vorhergehenden Ansprüche, dadurch gekennzeichnet, daß der Kolben (5) auf seiner Außenfläche mit Gewindeflanken (51) versehen ist, die in entsprechende Führungsnuten (52) einer Gewindehülse (53) eingreifen, wobei die Steigung der Gewindeflanken (51) so gewählt ist, daß bei gelöster Bremse (57) schon bei geringem Druck eine Drehung des Kolbens (5) erfolgt.

11. Vorrichtung nach einem der vorhergehenden Ansprüche, dadurch gekennzeichnet, daß das verstellbare Bremselement als konisch ausgebildeter Bremskonus (55) ausgeführt ist, der in einen komplementär konisch ausgebildeten Aufnahmebereich (54) des Kolbens (5) bringbar ist und mit diesem kraftschlüssig verbindbar ist und der Bremskonus (55) über ein Bremsfederelement (56) an der Kolbenstange (6) gelagert ist und mit dem Kolben (5) kraftschlüssig verbindbar ist.

12. Vorrichtung nach Anspruch 11, dadurch gekennzeichnet, daß der Kolben (5) zumindest in seinem Aufnahmebereich (54) spannzangenartig geschlitzt ist.

13. Vorrichtung nach Anspruch 11 oder 12, dadurch gekennzeichnet, daß das Betätigungselement (8) über einen quer zur Längsachse angeordneten Querbolzen (59) auf den Bremskonus (55) einwirkt und diesen gegen die Wirkung der Bremsfeder (56) axial verschiebt, sobald das Betätigungselement (8) aktiviert ist, um den Kolben (5) freizugeben.

14. Vorrichtung nach einem der Ansprüche 1, 9, 10 oder 11, dadurch gekennzeichnet, daß die mechanische Bremse (61) eine das verstellbare Bremselement aufweisende Vorlastbremsvorrichtung (62) und/oder eine Hauptlastbremsvorrichtung (63) enthält, wobei die Hauptlastbremsvorrichtung (63) z.B. an der Kolbenstange (6) angebrachte Hauptbremsnocken (64) aufweist, die über mindestens eine Hauptbremsfeder (65, 66) in axialer Richtung am Kolben (5) abgestützt sind, wobei der Hauptbremsnocken (64) auf einem Bremsvorsprung (67) des Kolbens (5) anliegt, sobald die an der Kolbenstange (6) angreifende Kraft größer als die vorgegebene Vorspannkraft der Hauptbremsfeder (65, 66) ist, wobei zwischen den Hauptbremsnocken (64) und dem Kolben (5) ein Axialwälzlager (68) angeordnet ist.

15. Vorrichtung nach Anspruch 11 oder 14, dadurch gekennzeichnet, daß sich die Hauptbremsfeder (56, 65, 66) aus mehreren in Reihe angeordneten Tellerfedern (58) oder einem plastoelastisches Element zusammensetzt.

16. Vorrichtung nach Anspruch 14 oder 15, dadurch gekennzeichnet, daß der Bremsvorsprung (67) als im Kolben (5) angeordnete Hauptbremshülse (69) ausgeführt ist.

17. Vorrichtung nach einem der Ansprüche 14 bis 16, dadurch gekennzeichnet, daß die Hauptbremsnocken (64) von zwei Hauptbremsfedern (65, 66) und zwei Hauptbremshülsen (69) umgeben sind, so daß die Hauptbremsnocken (64) in jeder axialen Verschieberichtung am Kolben (5) abgestützt sind.

18. Vorrichtung nach einem der Ansprüche 14 bis 17, dadurch gekennzeichnet, daß an der Kolbenstange (6) mindestens ein Mitnehmer (70) angebracht ist, der durch den Zylinder (3) hindurchgreift und an den eine außen am Zylinder (3) angebrachte Rückstellfeder (11) anliegt, wobei der Mitnehmer (70) z.B. in einem paßgenauen Schlitz am Zylinder (3) geführt ist.

19. Vorrichtung nach Anspruch 18, dadurch gekennzeichnet, daß der Mitnehmer (70) an der Kolbenstange oder am Hauptbremsnocken (64) angebracht ist.

20. Vorrichtung nach Anspruch 18 oder 19, dadurch gekennzeichnet, daß über ein Bremsfederelement (56) an der Kolbenstange (6) ein Bremskonus (55) gelagert ist, der mit dem Kolben (5) kraftschlüssig verbindbar ist.

## Claims

1. An arresting device for fixing the selected relative position of an adjustable first element (1) in respect to a second element (2), for example the seat of a piece of seating furniture in respect to the base of the piece of seating furniture, with a cylinder (3) fastened to the second element (2), in which a spacing element connected with the first element (1) can be displaced in the displacement direction (13) against the resistance of at least one restoring spring (11) or vice versa, wherein the displacement movement (7) can be blocked in any displaced position and can be released by means of an actuating element (8), and with a mechanical brake (15, 28, 38, 57, 61) having at least one adjustable brake element (16, 17, 32, 43), by means of which the actuation element (8) can be brought into a release position or can be released against the resistance of at least one brake spring (23, 26, 40, 56, 65, 66), the distance element is embodied as a piston rod (6), through which the actuation element (8) passes axially toward the exterior, and that the piston rod (6) is in operative connection with a piston (5), which can be arrested by means of the mechanical brake (15, 28, 38, 57, 61), characterized in that the mechanical brake (28) is inserted between the piston (5) and the actuating element (8) and the piston (5) can be screwed into the cylinder (3), wherein the mechanical brake (28) is a friction brake acting in the axial direction of the piston rod (6).

2. An arresting device for fixing the selected relative position of an adjustable first element (1) in respect to a second element (2), for example the seat of a piece of seating furniture in respect to the base of the piece of seating furniture, with a cylinder (3) fastened to the second element (2), in which a spacing element connected with the first element (1) can be displaced in the displacement direction (13) against the resistance of at least one restoring spring (11) or vice versa, wherein the displacement movement (7) can be blocked in any displaced position and can be released by means of an actuating element (8), and with a mechanical brake (15, 28, 38, 57, 61) having at least one adjustable brake element (16, 17, 32, 43), by means of which the actuation element (8) can be brought into a release position or can be released against the resistance of at least one brake spring (23, 26, 40, 56, 65, 66), the distance element is embodied as a piston rod (6), through which the actuation element (8) passes axially toward the exterior, and that the piston rod (6) is in operative connection with a piston (5), which can be arrested by means of the mechanical brake (15, 28, 38, 57, 61), the mechanical brake (15, 38) is inserted between the piston (5) and the cylinder (3), wherein at least one brake element (16, 17), which can be moved transversely with the longitudinal axis of the piston (5), is located at the piston (5) and which in its effective position is pressed against the inner cylinder wall (22), wherein each brake element (16, 17) consists of a brake shoe (18) with a circular-cylindrically domed brake surface (19) and a bearing pin (20) located on its back, which is displaceably seated in a radial piston bore (21) and against whose inner end an actuating cone (9) is placed or can be placed, which is located on the inner end of the actuating element (8), wherein the cone end of smaller diameter is connected with the actuating element (5), and that the restoring spring (11) for the piston (5) or the piston rod (6) preferably forms the brake spring (23) at the same time and rests with one end on the cylinder bottom (12) and with the other end on the actuating cone (9), wherein the cone end of larger diameter makes a transition to a flat plate (10) guided in the cylinder (3) or is connected therewith, characterized in that the piston (5) is seated rotatably, but axially non-displaceably, on the piston rod (6), wherein the piston (5) performs a controlled rotating movement when displaced in the cylinder (3), and that the piston rod (6) is seated fixed against relative rotation in respect to the cylinder (3).

3. The device in accordance with claim 2, characterized in that a brake disk (32), which is guided displaceably but non- rotatably on the piston rod end (33) at the piston side, is located on the inner end of the actuating element (8), and that the associated end of the piston (5) represents or is the brake counter-face (35), wherein the piston (5) is seated rotatably but non-displaceably on the piston rod (6), wherein the brake disk (32) simultaneously forms a spring plate for the associated end of the restoring spring (11) of the piston (5) or the piston rod (6).

4. The device in accordance with one of claims 2 or 3, characterized in that at least one helically-shaped guide groove (29) having preferably rectangular or trapezoidal cross section for one or each one of radial guide pins (30, 31) of the piston (5) is located on the inner cylinder wall (22), wherein at least one brake spring (26), preferably a plate spring package, is inserted between the outer end or an outer area of the actuating element (8) and the outer end of the piston rod (6).

5. The device in accordance with claim 1, characterized in that two brake shoes (18), respectively offset by 180°, and guide pins (30, 31) are located on the piston (5), wherein the guide pins are spaced apart from the brake shoes.

6. The device in accordance with claim 1 or 2, characterized in that a brake body (39) is located in the piston interior, which is spring-loaded in the direction toward the piston rod by means of a brake spring (40) and has a conical pressure body (42) tapering in the direction toward the piston rod (6), against which at least one brake pin (43), which is seated radially displaceable in the piston (5), rests, whose outer end is pressed against the inner cylinder wall (42) by the brake spring (40), wherein the brake body (39) can be displaced against the resistance of the brake spring (40) by means of the actuating element (8), and that the piston (5) is screwably guided in the cylinder (3) and is spring-loaded by a load spring (11) in the direction toward the piston rod (6) and is rotatable in relation to the piston rod (6) around the center longitudinal axis, and that at least one helically-shaped guide groove (29) for one of each one of a radial guide pin (30, 31) of the piston (5) is located on the inner cylinder wall (22), wherein the guide pins (30, 31) and the brake pins (43) are located in approximately the same piston plane, and wherein furthermore insertion pins (30, 31) in particular are disposed, preferably centered, between two neighbouring brake pins (43).

7. The device in accordance with claim 6, characterized in that the piston (5) is made of two parts, wherein its first piston element (44), which has a piston bottom (41) for the brake spring support, is coupled with the second piston element (45) associated with the piston rod by means of an axial saw-tooth-shaped interlock (46).

8. The device in accordance with claim 7, characterized in that an outer collar (48) or the like is located on the inner end of the piston rod (6), which is enclosed by means of a frictional connection by the associated edge (49) of the second piston element (45).

9. The device in accordance with claim 1, characterized in that the piston rod (6) is seated in the piston (5) so that it is rotatable relative to it.

10. The device in accordance with at least one of the preceding claims, characterized in that the piston (5) is provided on its outside with threaded flanks (51), which engage corresponding guide grooves (52) of a threaded sleeve (53), wherein the pitch of the threaded flanks (51) has been selected such that, with the brake (57) released, a rotation of the piston (5) takes place even at a slight pressure.

11. The device in accordance with at least one of the preceding claims, characterized in that the displaceable brake element is embodied as a conically-shaped brake cone (55), which can be brought into a complimentary conically shaped receiving area (54) of the piston 5 and can be frictionally connected with the latter and that the brake cone (55) is seated via a brake spring element (56) on the piston rod (6) and can be frictionally connected with the piston (5).

12. The device in accordance with claim 11, characterized in that the piston (5) is slit in the manner of a collet chuck at least in its receiving area (54).

13. The device in accordance with at least one of claims 11 or 12, characterized in that the actuating element (8) acts on the brake cone (55) via a transverse bolt (59) arranged transversely in respect to the longitudinal axis and displaces it axially against the effect of the brake spring (56) in order to release the piston (5) as soon as the activating element (8) has been activated.

14. The device in accordance with at least one of claims 1, 9, 10 or 11, characterized in that the mechanical brake (61) contains a pre-load brake device (62), containing the displaceable brake element, and/or a main load brake device (63), wherein the main load brake device (63) has main brake cams (64), which are attached to the piston rod (6) for example, which are supported in the axial direction on the piston (5) by means of at least one main brake spring (65, 66), wherein the main brake cam (64) rests on a brake protrusion (67) of the piston (5) as soon as the force acting on the piston rod (6) is greater than the preset prestressing force of the main brake spring (65, 66), wherein an axial rolling bearing (68) is disposed between the main brake cam (64) and the piston (5).

15. The device in accordance with claim 11 or 14, characterized in that the main brake spring (65, 66) is composed of several plate springs (58) arranged in series or of a plasto-elastic element.

16. The device in accordance with claim 14 or 15, characterized in that the brake protrusion (67) is embodied as a main brake sleeve (69) disposed in the piston (5).

17. The device in accordance with at least one of claims 14 to 16, characterized in that the main brake cams (64) are surrounded by two main brake springs (65, 66) and two main brake sleeves (69), so that the main brake cams (64) are supported on the piston (5) in every axial displacement direction.

18. The device in accordance with at least one of claims 14 to 17, characterized in that at least one catch (70) is attached to the piston rod (6), which extends through the cylinder (3) and against which a restoring spring (11), which is attached on the outside of the cylinder (3), rests, wherein the catch (70) is guided with pass fit in a slit in the cylinder (3).

19. The device in accordance with claim 18, characterized in that the catch (70) is attached to the piston rod, preferably on the main brake cam (64).

20. The device in accordance with at claim 18 or 19, characterized in that a brake cone (55) is seated on the piston rod (6) by means of a brake spring element (56), which can be frictionally connected with the piston (5).

## Revendications

1. Dispositif d'arrêt pour le blocage dans la position relative sélectionnée d'un premier élément réglable (1) par rapport à un second élément (2), par exemple une assise de siège par rapport à un piétement de chaise, avec un cylindre (3) fixé au second élément (2), dans lequel une entretoise reliée au premier élément (1) est mobile dans le sens de déplacement (13) à l'encontre de la résistance d'au moins un ressort de rappel (11) ou inversement, le mouvement de translation (7) pouvant être bloqué et débloqué à chaque position de translation au moyen d'un élément d'actionnement (8), et avec un frein mécanique (15, 28, 38, 57, 61) présentant au moins un élément de freinage mobile (16, 17, 32, 43) et à travers lequel l'élément d'actionnement (8) peut être dégagé ou porté dans une position de libération à l'encontre de la résistance d'au moins une rondellefrein (23, 26, 40, 56, 65, 66), l'entretoise se présentant sous la forme d'une tige de piston (6) traversée axialement vers l'extérieur par l'élément d'actionnement (8), et la tige de piston (6) étant en liaison positive avec un piston (5) qui peut être arrêté par le frein mécanique (15, 28, 38, 57, 61), caractérisé en ce que le frein mécanique (28) est agencé entre le piston (5) et l'élément d'actionnement (8) et en ce que le piston (5) peut être vissé dans le cylindre (3), le frein mécanique (28) étant en particulier un frein à friction opérationnel dans la direction axiale de la tige de piston (6).

2. Dispositif d'arrêt pour le blocage dans la position relative sélectionnée d'un premier élément réglable (1) par rapport à un second élément (2), par exemple une assise de siège par rapport à un piétement de chaise, avec un cylindre (3) fixé au second élément (2), dans lequel une entretoise reliée au premier élément (1) est mobile dans le sens de déplacement (13) à l'encontre de la résistance d'au moins un ressort de rappel (11) ou inversement, le mouvement de translation (7) pouvant être bloqué et débloqué à chaque position de translation au moyen d'un élément d'actionnement (8), et avec un frein mécanique (15, 28, 38, 57, 61) présentant au moins un élément de freinage mobile (16, 17, 32, 43) et à travers lequel l'élément d'actionnement (8) peut être dégagé ou porté dans une position de libération à l'encontre de la résistance d'au moins une rondellefrein (23, 26, 40, 56, 65, 66), l'entretoise se présentant sous la forme d'une tige de piston (6) traversée axialement vers l'extérieur par l'élément d'actionnement (8), et la tige de piston (6) étant en liaison positive avec un piston (5) qui peut être arrêté par le frein mécanique (15, 28, 38, 57, 61),, le frein mécanique (15, 38) étant agencé entre le piston (5) et le cylindre (3), et au moins un élément de freinage (16, 17) mobile perpendiculairement à l'axe longitudinal du piston (5) se trouvant sur ledit piston (5), ledit élément de freinage, dans sa position de fonctionnement, étant plaqué contre la paroi interne de cylindre (22), chaque élément de freinage (16, 17) consistant en une mâchoire de frein (18) à surface de freinage (19) incurvée en forme de cylindre et en un tourillon (20) situé sur la face arrière dudit élément de freinage, ledit tourillon étant monté mobile dans un alésage radial (21) du piston et étant ou pouvant être, à son extrémité interne, en contact avec un cône d'actionnement (9), qui se trouve à l'extrémité interne de l'élément d'actionnement (8), l'extrémité de cône qui présente un diamètre inférieur étant reliée à l'élément d'actionnement (8), et le ressort de rappel (11) du piston (5) ou de la tige de piston (6) faisant en même temps office de rondellesfreins (23) et étant en contact d'un côté avec le fond du cylindre (12) et de l'autre côté avec le cône d'actionnement (9), l'extrémité de cône qui présente le plus grand diamètre se prolongeant en un disque (10) plat guidé à l'intérieur du cylindre (3) ou étant reliée audit disque, caractérisé en ce que le piston (5) est monté mobile en rotation mais fixe en translation axiale sur la tige de piston (6), le piston (5) décrivant, lors de sa translation à l'intérieur du cylindre (3) un mouvement de rotation commandé et/ou la tige de piston (6) étant montée fixe en rotation par rapport au cylindre (3).

3. Dispositif selon la revendication 2, caractérisé en ce qu'un disque de freinage (32) monté mobile en translation mais fixe en rotation sur l'extrémité de tige de piston (33) côté piston se trouve à l'extrémité interne de l'élément d'actionnement (8), et en ce que l'extrémité associée du piston (5) forme ou présente la contre-surface de freinage (35), le piston (5) étant monté mobile en rotation mais fixe en translation sur la tige de piston (6), le disque de freinage (32) faisant en même temps office de coupelle de ressort pour l'extrémité associée du ressort de rappel (11) du piston (5) ou de la tige de piston (6).

4. Dispositif selon l'une des revendications 2 et 3, caractérisé en ce que la paroi interne (22) du cylindre (3) présente au moins une rainure de guidage hélicoïdale (29) de section de préférence rectangulaire ou trapézoïdale et destinée à recevoir chacune un téton de guidage radial (30, 31) du piston (5) qui s'engage dans la ou lesdites rainures, la ou les rondelles-freins (26) ou un ensemble de rondelles-ressorts étant monté(s) entre l'extrémité extérieure ou une zone externe de l'élément d'actionnement (8) et l'extrémité extérieure de la tige de piston (6).

5. Dispositif selon la revendication 1, caractérisé en ce que, sur le piston (5), sont montées deux mâchoires de frein (18) et deux tétons de guidage (30, 31) respectivement décalés de 180°, les tétons de guidage étant agencés dans des évidements en regard des mâchoires de frein.

6. Dispositif selon la revendication 1 ou 2, caractérisé en ce qu'à l'intérieur du piston est prévu un corps de freinage (39) chargé par une rondelle-frein (40) contre la tige de piston, avec un corps de pression (42) conique s'effilant en direction de la tige de piston (6), contre lequel s'appuie au moins une goupille de freinage (43) montée mobile radialement sur le piston (5) et dont l'extrémité externe est plaquée contre la paroi interne de cylindre (22) par la rondelle-frein (40), le corps de freinage (39) pouvant être déplacé à l'encontre de la résistance de la rondelle-frein (40) au moyen de l'élément d'actionnement (8), et en ce que le piston (5) est guidé par vissage dans le cylindre (3), est plaqué par un ressort de charge (11) contre la tige de piston (6) et est mobile en rotation autour de l'axe longitudinal central par rapport à la tige de piston (6), et en ce que la paroi interne de cylindre (22) présente au moins une rainure de guidage hélicoïdale (29) destinée à recevoir chacune un téton de guidage (30, 31) radial que présente le cylindre (5) et qui s'engage dans la ou lesdites rainures, lesdits tétons de guidage (30, 31) et les goupilles de freinage (43) se trouvant approximativement dans le même plan sur le piston, et en particulier un téton de guidage (30, 31) étant agencé entre deux goupilles de freinage voisines (43), de préférence à équidistance de ces dernières.

7. Dispositif selon la revendication 6, caractérisé en ce que le piston (5) est composé de deux parties, la première partie de piston (44), qui présente un fond de piston (41) où s'appuie la rondelle-frein, étant couplée à la seconde partie de piston (45) associée à la tige de piston par le biais d'une denture en dents de scie (46) axiale en forme de couronne.

8. Dispositif selon la revendication 7, caractérisé en ce qu'à l'extrémité interne de la tige de piston (6) se trouve une collerette (48) ou similaire qui est entourée avec friction par le bord (49) associé de la seconde partie de piston (45).

9. Dispositif selon la revendication 1, caractérisé en ce que la tige de piston (6) est montée dans le piston (5) avec capacité de rotation par rapport audit piston.

10. Dispositif selon l'une des revendications précédentes, caractérisé en ce que le piston (5) présente sur sa surface externe des flancs filetés (51) qui s'engagent dans des rainures de guidage (52) complémentaires d'une douille taraudée (53), le pas des flancs filetés (51) étant choisi de telle sorte qu'il suffise d'une faible pression pour provoquer la rotation du piston (5) lorsque le frein (57) est relâché.

11. Dispositif selon l'une des revendications précédentes, caractérisé en ce que l'élément de freinage mobile se présente sous la forme d'un cônefrein (55) conique qui peut venir s'emboîter dans un logement conique complémentaire (54) du piston (5) et qui peut être relié positivement à celui-ci et en ce que le cône-frein (55) est monté sur la tige de piston (6) par le biais d'un élément à rondellesfreins (56) et peut être relié positivement au piston (5).

12. Dispositif selon la revendication 11, caractérisé en ce que le piston (5) est fendu à la manière d'une pince de serrage au moins au niveau du logement (54).

13. Dispositif selon la revendication 11 ou 12, caractérisé en ce que l'élément d'actionnement (8) agit sur le cône-frein (55) par le biais d'un axe transversal (59) agencé transversalement à l'axe longitudinal et déplace axialement ledit cône-frein à l'encontre des rondelles-freins (56) dès que l'élément d'actionnement (8) est activé pour libérer le piston (5).

14. Dispositif selon l'une des revendications 1, 9, 10 ou 11, caractérisé en ce que le frein mécanique (61) comporte un dispositif de freinage à charge préalable (62), qui présente l'élément de freinage mobile, et/ou un dispositif de freinage à charge principale (63), ledit dispositif de freinage à charge principale (63) présentant des cames de frein principal (64) rapportées par exemple sur la tige de piston (6) et plaquées contre le piston (5) dans la direction axiale au moyen d'au moins une rondelle-frein principale (65, 66), la came de frein principal (64) reposant sur un ressaut de freinage (67) du piston (5), dès que la force appliquée au niveau de la tige de piston (6) est supérieure à la force de pré-tension prédéterminée de la rondelle-frein principale (65, 66), un roulement axial (68) étant agencé entre les cames de frein principal (64) et le piston (5).

15. Dispositif selon la revendication 11 ou 14, caractérisé en ce que la rondelle-frein principale (56, 65, 66) se compose d'une pluralité de rondelles-ressorts (58) agencées en série ou d'un élément plastoélastique.

16. Dispositif selon la revendication 14 ou 15, caractérisé en ce que le ressaut de freinage (67) se présente sous la forme d'une douille de frein principal (69) agencée dans le piston (5).

17. Dispositif selon l'une des revendications 14 à 16, caractérisé en ce que les cames de frein principal (64) sont entourées de deux rondellesfreins principales (65, 66) et de deux douilles de frein principal (69), de sorte que les cames de frein principal (64) sont soutenues au niveau du piston (5) dans chaque sens de translation axiale.

18. Dispositif selon l'une des revendications 14 à 17, caractérisé en ce que, sur la tige de piston (6), est rapporté au moins un dispositif d'entraînement (70) qui traverse le cylindre (3) et sur lequel s'appuie le ressort de rappel (11) rapporté à l'extérieur du cylindre (3), ledit dispositif d'entraînement (70) étant par exemple guidé dans une fente ajustée que présente le cylindre (3).

19. Dispositif selon la revendication 18, caractérisé en ce que le dispositif d'entraînement (70) est rapporté sur la tige de piston ou sur la came de frein principal (64).

20. Dispositif selon la revendication 18 ou 19, caractérisé en ce qu'un cône-frein (55) est monté sur la tige de piston (6) par le biais d'une rondelle-frein (56), ledit cône-frein pouvant être relié positivement au piston (5).
